# EUROPÄISCHE PATENTSCHRIFT

(11) **EP 2 898 635 B1**
(45) Veröffentlichungstag und Bekanntmachung des Hinweises auf die Patenterteilung: **13.09.2017**
(21) Anmeldenummer: 13791934.6
(22) Anmeldetag: 07.11.2013
(51) Int. Cl.: H04L 12/46, H04L 29/06

(54) **SYSTEM UND VERFAHREN ZUR WARTUNG EINER WERKZEUGMASCHINE**
SYSTEM AND METHOD FOR THE MAINTENANCE OF A MACHINE TOOL
SYSTÈME ET PROCÉDÉ DE MAINTENANCE D'UNE MACHINE-OUTIL

(30) Priorität: 08.11.2012 DE 102012220396
(43) Veröffentlichungstag der Anmeldung: 29.07.2015
(73) Patentinhaber: Trumpf Werkzeugmaschinen GmbH + Co. KG, 71254 Ditzingen (DE)
(72) Erfinder: BAUER, Klaus, D-71254 Ditzingen (DE); BOCK, Hans-Peter, D-71732 Tamm (DE); REINWALD, Simon, D-75365 Calw-Hirsau (DE)
(74) Vertreter: Prüfer & Partner mbB Patentanwälte · Rechtsanwälte
(86) Internationale Anmeldenummer: PCT/EP2013/003359
(87) Internationale Veröffentlichungsnummer: WO 2014/072059

(56) Entgegenhaltungen:
- EP-A1- 1 715 395
- DE-A1-102007 030 396
- Anonymous: "Industrial communication - Brochure", , 30. Mai 2011 (2011-05-30), XP055017592, Gefunden im Internet: URL:http://www.automation.siemens.com/mcms /infocenter/dokumentencenter/sc/ic/Documen tsu20Brochures/6ZB5530-1AE02-0BB4.pdf [gefunden am 2012-01-26]
- GRAVEMAN RFG SECURITY R ET AL: "Using IPsec to Secure IPv6-in-IPv4 Tunnels; rfc4891.txt", 20070501, 1. Mai 2007 (2007-05-01), XP015052431, ISSN: 0000-0003
- KENT K SEO BBN TECHNOLOGIES S: "Security Architecture for the Internet Protocol; rfc4301.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1 December 2005 (2005-12-01), XP015043220, ISSN: 0000-0003

## Beschreibung

Die Erfindung betrifft ein System und ein Verfahren zum Warten von Werkzeugmaschinen und Maschinensteuerungen und betrifft insbesondere ein Verfahren, bei dem Daten zwischen einem Servicecomputer und einem Maschinenhersteller übertragen werden können.

Die globale Ausrichtung heutiger Maschinenhersteller mit weltweit ansässigen Kunden/Maschinenbetreibern macht es erforderlich, Wartung, Fehlerdiagnose und auch Reparaturen der Maschinen sowohl vor Ort als auch per Fernzugriff durchführen zu können. In dieser Anmeldung werden unter dem Begriff "Maschinen" sämtliche Bearbeitungsanlagen, beispielsweise zur Laserbearbeitung, zum Stanzen oder Biegen, und Geräte, wie beispielsweise Laserstrahlquellen, Plasma- oder Induktionsgeneratoren, zusammengefasst. Neben der früher üblichen Direkteinwahl eines beim Maschinenhersteller verorteten Servicecomputer über ein analoges Modem oder eine ISDN-Verbindung zu einer Maschine beim Maschinenbetreiber gibt es moderne Kommunikationstechniken, insbesondere das sogenannte Virtual Private Network (VPN), das einen verschlüsselten Fernzugriff über das Internet ermöglicht.

Es lassen sich jedoch nicht alle Wartungstätigkeiten über einen Fernzugriff durchführen, so dass in bestimmten Fällen der Einsatz von Wartungspersonal und -ausrüstung vor Ort beim Maschinenbetreiber erforderlich wird. In diesem Fall besteht das Problem, dass dem Wartungspersonal vor Ort Daten oder Werkzeugapplikationen des Maschinenherstellers nicht zur Verfügung stehen, wenn sie auf Datenverarbeitungsvorrichtungen beim Maschinenhersteller verortet sind.

Im Stand der Technik wurde das Problem dadurch gelöst, dass Wartungsvorrichtungen, beispielsweise ein tragbarer Servicecomputer, mit mobilen Kommunikationsmitteln versehen sind, die eine Kommunikation des Servicecomputers vor Ort beim Maschinenbetreiber mit Datenverarbeitungsanlagen beim Maschinenhersteller ermöglichen sollen. Hierbei tritt das Problem auf, dass diese Datenübertragungsmöglichkeiten oft nur eine geringe Datenübertragungsrate zulassen und in manchen Umgebungen und Werkhallen ein Mobilfunkempfang auch vollständig unmöglich sein kann.

Alternativ ist es möglich, sich über ein lokales Datennetz und die Datenübertragungsinfrastruktur des Maschinenbetreibers über ein Weitverkehrsnetz wie das Internet mit den Datenverarbeitungsanlagen des Maschinenherstellers zu verbinden und die benötigten Daten zu beziehen. Hierbei besteht das Problem, dass in vielen Bereichen das Verbinden eines Fremdrechners eines Maschinenherstellers mit dem Datennetz eines Maschinenbetreibers aus Sicherheitsgründen nicht erlaubt ist. Darüber hinaus ist es erforderlich, dass der Servicecomputer an die Datennetzkonfiguration des jeweiligen Maschinenbetreibers angepasst werden muss, was wiederum zu erhöhtem Aufwand bei Wartungsarbeiten führt und sogar die Unterstützung durch die Datennetzadministration des Maschinenbetreibers erforderlich machen kann.

Die Druckschriften EP 1 715 395 und DE 10 2007 030 396 A1 offenbart eine Vorrichtung zur Steuerung einer Maschine mit einem Steuerungsrechner, auf dem eine Maschinen-Bediensoftware betrieben wird. Die Vorrichtung weist einen virtuellen Rechner auf, auf dem mindestens eine Anwendung ausgewählt aus der Gruppe, umfassend mindestens die Anwendungen "Maschinen-Bediensoftware", "Internet-Anbindung" und "Internet-Verschlüsselung" betrieben wird. Hierbei offenbart diese Druckschrift eine über jeweils ein VPN geschützte Verbindung zwischen einem zentralen Computer und einem Servicecomputer und dem zentralen Computer und einer Maschinensteuerung. Dieser zentrale Computer verfügt über eine Firewall. Hierbei ist der zentrale Computer mit dem Internet und über das Internet mit einem Hausdatennetz des Maschinenbetreibers und einem Servicecomputer verbunden.

Das Werk "Industrial Communication-Brochure", XP055017592 offenbart eine Verbindung zwischen einem Service Center und einem Industrieethernet über eine VPN-Verbindung, wobei an beiden Endpunkten der VPN-Verbindung SCALANCE^{®} S - Vorrichtungen des Herstellers Siemens^{®} vorgesehen sind, die den VPN-Aufbau steuern.

Es ist daher die Aufgabe der vorliegenden Erfindung, ein System und ein Verfahren bereitzustellen, über das Daten zwischen einem Servicecomputer bei einem Maschinenbetreiber und Datenverarbeitungsvorrichtungen bei einem Maschinenhersteller mit geringem Aufwand übertragen werden können.

Diese Aufgabe wird gelöst durch die Merkmale des Systems gemäß Anspruch 1 und die Verfahrensschritte des Verfahrens nach Anspruch 10. Vorteilhafte Weiterbildungen sind Gegenstand der Unteransprüche.

Offenbart wird ein Maschinensteuerungswartungssystem, das eine Eingangskommunikationsvorrichtung zur Datenübertragung mit einer ersten Tunnelerzeugungsvorrichtung, die eingerichtet ist, zur Übertragung bestimmte Daten als VPN-Tunnel zu verschlüsseln und zu entschlüsseln, und einer Paketweiterleitungsvorrichtung, die eingerichtet ist, Pakete eines Protokolls der Schicht 3 oder höher des ISO-OSI-Referenzmodells zwischen verschiedenen Datenübertragungsnetzen zu übertragen oder deren Übertragung zu unterbinden aufweist. Das System weist ferner eine Maschinensteuerung, die eingerichtet ist, eine Werkzeugmaschine zu steuern, auf. Hierbei ist die Eingangskommunikationsvorrichtung mit einem ersten Datennetz verbindbar, über das über eine erste Kommunikationsverbindung über einen ersten VPN-Tunnel Daten zwischen der Eingangskommunikationsvorrichtung und der ersten Ausgangskommunikationsvorrichtung übermittelt werden können. Die Eingangskommunikationsvorrichtung ist mit einem zweiten Datennetz verbindbar, über das über eine zweite Kommunikationsverbindung ein Servicecomputer, der eingerichtet ist, um Wartungsarbeiten an der Maschinensteuerung durchzuführen, mit der Eingangskommunikationsvorrichtung verbindbar ist, sodass Daten zwischen dem Servicecomputer und der Eingangskommunikationsvorrichtung übertragbar sind. Dabei sind das erste Datennetz und das zweite Datennetz virtuell voneinander getrennt, und die Paketweiterleitungsvorrichtung ist eingerichtet, Datenpakete des Protokolls der Schicht 3 oder höher des ISO-OSI-Referenzmodells von und zu dem Servicecomputer über und von dem ersten VPN-Tunnel weiterzuleiten, dann wenn der Servicecomputer mit der Eingangskommunikationsvorrichtung verbunden ist.

Detaillierter wird offenbart, dass die Eingangskommunikationsvorrichtung ferner eine erste Datenübertragungsschnittstelle, die eingerichtet ist, Daten gemäß einem Protokoll der Schicht 2 (Sicherungsschicht) des ISO-OSI-Referenzmodells zu übertragen, und eine zweite Datenübertragungsschnittstelle, die eingerichtet ist, Daten gemäß einem Protokoll der Schicht 2 (Sicherungsschicht) des ISO-OSI-Referenzmodells zu übertragen, aufweist. Dabei ist die Maschinensteuerung mit der Eingangskommunikationsvorrichtung verbunden, sodass Daten zwischen der Maschinensteuerung und der Eingangskommunikationsverbindung übertragbar sind. Hierbei ist die Eingangskommunikationsvorrichtung eingerichtet, auf Schicht 2 des ISO-OSI-Referenzmodells keine Daten zwischen der ersten Datenübertragungsschnittstelle und der zweiten Datenübertragungsschnittstelle zu übertragen und die Eingangskommunikationsvorrichtung ist über die erste Datenübertragungsschnittstelle über die erste Kommunikationsverbindung mit der ersten Ausgangskommunikationsvorrichtung verbindbar. Dabei ist die Tunnelerzeugungsvorrichtung eingerichtet, über die erste Kommunikationsverbindung zu übertragende Daten als das erste VPN zu verschlüsseln und zu entschlüsseln, der Servicecomputer über die zweite Kommunikationsverbindung über die zweite Datenübertragungsschnittstelle mit der Eingangskommunikationsvorrichtung verbindbar, und die Paketweiterleitungsvorrichtung eingerichtet, Datenpakete des Protokolls der Schicht 3 oder höher des ISO-OSI-Referenzmodells über die erste Datenübertragungsschnittstelle und die zweite Datenübertragungsschnittstelle weiterzuleiten.

Durch eine solche im Einflussbereich des Maschinenherstellers stehende und von diesem vorab einheitlich konfigurierbare Eingangskommunikationsvorrichtung vorort beim Maschinenbetreiber ist es möglich, eine Kommunikationsverbindung zwischen einem Servicecomputer und Datenverarbeitungsanlagen eines Maschinenherstellers allein dadurch zu erreichen, dass der Servicecomputer mit der Eingangskommunikationsvorrichtung verbunden wird, wobei ein hohes Schutzniveau durch die Trennung der Datennetzbereiche erhalten bleibt.

Offenbart ist ferner, dass die Eingangskommunikationsvorrichtung ferner mit einem dritten Datennetz verbunden ist, über das über eine dritte Kommunikationsverbindung die Maschinensteuerung oder mehrere Maschinensteuerungen mit der Eingangskommunikationsvorrichtung verbunden ist, sodass Daten zwischen der Maschinensteuerung und der Eingangskommunikationsvorrichtung übertragbar sind. Dabei ist das dritte Datennetz von dem ersten Datennetz und dem zweiten Datennetz virtuell getrennt, und die Paketweiterleitungsvorrichtung ist eingerichtet, Datenpakete des Protokolls der Schicht 3 oder höher des ISO-OSI-Referenzmodells zwischen dem Servicecomputer und der Maschinensteuerung weiterzuleiten, dann wenn der Servicecomputer mit der Eingangskommunikationsvorrichtung verbunden ist.

Durch die über das dritte virtuell getrennte Datennetz angeschlossene Maschinensteuerung kann die Maschinen- und Maschinensteuerungswartung über den Servicecomputer einfach durchgeführt und gleichzeitig durch Trennung der Datennetzsegmente das Schutzniveau auf hohem Niveau gehalten werden werden.

Offenbart wird ferner, dass das Maschinensteuerungswartungssystem ferner eine Datennetzweiche (auch Switch genannt) mit einer Vielzahl von vierten Datenübertragungsschnittstellen aufweist, wobei die Datennetzweiche VLAN-fähig ist, d.h. so konfigurierbar ist, dass Gruppen von vierten Datenübertragungsschnittstellen so gebildet werden können, dass auf Schicht 2 des ISO-OSI-Referenzmodells keine Daten zwischen den Gruppen übertragen werden und die Gruppen jeweils getrennte virtuelle Datennetze bilden, die Datennetzweiche und die Eingangskommunikationsvorrichtung VLAN-tagging-fähig sind, d.h. eingerichtet sind, Datenrahmen des Protokolls der Schicht 2 des ISO-OSI-Referenzmodells mit VLAN-Information so zu markieren, dass die Datenrahmen einer Gruppe von vierten Datenübertragungsschnittstellen zugeordnet werden können. Die Datennetzweiche und die Eingangskommunikationsvorrichtung sind über die zweite Datenübertragungsschnittstelle und eine vierte Datenübertragungsschnittstelle verbunden, so dass Daten zwischen der Datennetzweiche und der Eingangskommunikationsvorrichtung übertragbar sind. Die Datennetzweiche und die Eingangskommunikationsvorrichtung sind so konfiguriert, dass eine erste Gruppe aus mindestens einer vierten Datenübertragungsschnittstelle eingerichtet ist, über die der Servicecomputer mit der Datennetzweiche und dadurch mit der Eingangskommunikationsvorrichtung verbindbar ist.

Durch die Verwendung einer Datennetzweiche/eines Switches, bei dem Schnittstellen zu virtuellen LANs zusammengeschaltet und diese virtuellen LANs voneinander isoliert werden können und der Datenrahmen beispielsweise des Ethernet-Protokolls mit VLAN-Information markiert werden kann, wird trotz der Verwendung von wenigen physikalischen Datenleitungen und Vorrichtungen das Schutzniveau durch Datennetzsegmente bei geringeren Hardwarekosten aufrecht erhalten.

Offenbart ist, dass der Servicecomputer mit der Eingangskommunikationsvorrichtung verbunden ist, wobei der Servicecomputer eine zweite Tunnelerzeugungsvorrichtung aufweist, die eingerichtet ist, Daten, die zur Übertragung zwischen dem Servicecomputer und einer zweiten Ausgangskommunikationsvorrichtung, z.B. einem Standard-VPN-Gateway eines Maschinenherstellers, bestimmt sind, als zweiten VPN-Tunnel zu verschlüsseln, so dass die Datenübertragung des zweiten VPN-Tunnels als Teil der Datenübertragung im ersten VPN-Tunnels erfolgt.

Ist der Servicecomputer selbst dazu in der Lage, ein VPN mit einer zweiten Ausgangskommunikationsvorrichtung herzustellen, kann der Datenverkehr zwischen dem Servicecomputer und Datenverarbeitungsanlagen des Maschinenherstellers von solchen Daten getrennt werden, die zur Durchführung einer Fernwartung über das erste VPN übertragen werden, für die möglicherweise ein anderes Schutzniveau gilt.

Weitere Vorteile und vorteilhafte Ausgestaltungen des Gegenstands der Erfindung sind der Beschreibung, den Zeichnungen und den Ansprüchen entnehmbar. Ebenso können die vorstehend genannten und die noch weiter aufgeführten Merkmale erfindungsgemäß jeweils einzeln für sich oder zu mehreren in beliebiger Kombination Verwendung finden.

Im Folgenden werden Ausführungsbeispiele der Erfindung anhand der Figuren beschrieben.
- Fig. 1: zeigt ein erstes Ausführungsbeispiel des erfindungsgemäßen Maschinensteuerungswartungssystems.
- Fig. 2: zeigt ein zweites Ausführungsbeispiel des erfindungsgemäßen Maschinensteuerungswartungssystems.

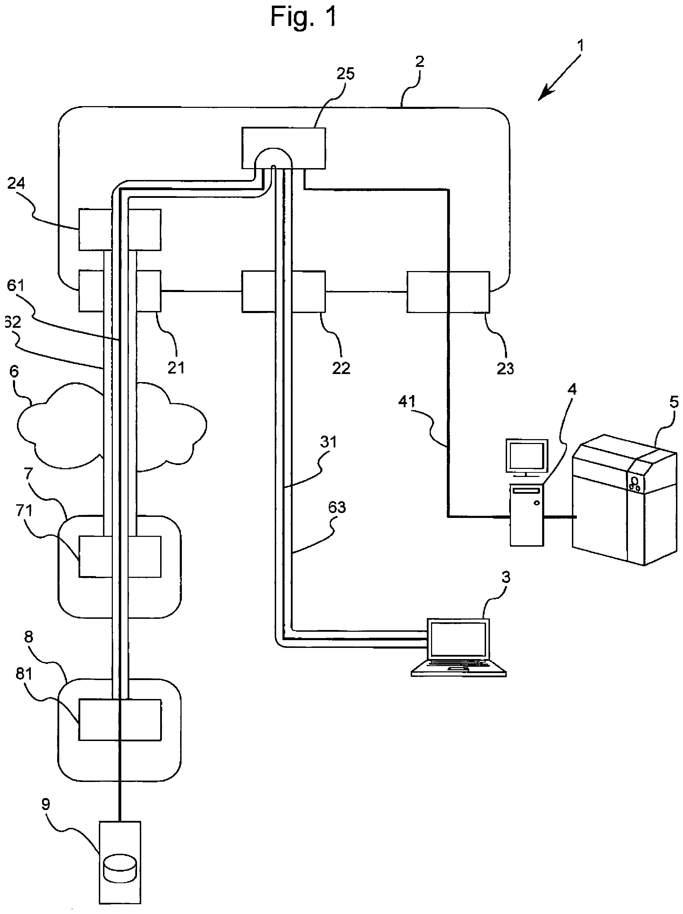

Fig. 1 zeigt ein erfindungsgemäßes System zur Maschinensteuerungswartung gemäß einem ersten Ausführungsbeispiel mit einer Eingangskommunikationsvorrichtung 2, einem Servicecomputer 3 und einer Maschinensteuerung 4.

Die Eingangskommunikationsvorrichtung ist eine elektronische Datenverarbeitungsvorrichtung, die in diesem Ausführungsbeispiel einen Teil eines Telepräsenzsystems implementiert, die bei einem Maschinenbetreiber verortet ist. Im Ausführungsbeispiel ist die Eingangskommunikationsvorrichtung eine "TRUMPF Telepresence Box". Die Eingangskommunikationsvorrichtung 2 weist eine erste Datenübertragungsschnittstelle 21 auf, mit der die die Eingangskommunikationsvorrichtung 2 entweder mittelbar über ein Datennetz, beispielsweise das Datennetz des Maschinenbetreibers oder unmittelbar mit einem Weitverkehrsnetz 6, im Ausführungsbeispiel mit dem Internet, als erstes Datennetz verbunden ist. Über eine erste Kommunikationsverbindung 61 kann die Eingangskommunikationsvorrichtung mit einer ersten Ausgangskommunikationsvorrichtung 7 verbunden werden. Die Eingangskommunikationsvorrichtung 2 weist ferner eine zweite Datenübertragungsschnittstelle 22 auf, die mit einem zweiten Datennetz verbunden ist, über die der Servicecomputer 3 über eine zweite Kommunikationsverbindung 31 mit der Eingangskommunikationsvorrichtung 2 verbunden ist. Das zweite Datennetz kann auch ausschließlich zwei Datenkommunikationseilnehmer verbinden und wie im Ausführungsbeispiel lediglich den Servicecomputer 3 und die Eingangskommunikationsvorrichtung 2 verbinden.

Die Eingangskommunikationsvorrichtung 2 weist ferner eine dritte Datenübertragungsschnittstelle 23 auf, über welche die Maschinensteuerung 4 mit der Eingangskommunikationsvorrichtung 2 über eine dritte Kommunikationsvorrichtung 41 verbunden ist.

Die erste Datenübertragungsschnittstelle 21, die zweite Datenübertragungsschnittstelle 22 und die dritte Datenübertragungsschnittstelle 23 sind so eingerichtet, dass sie wie bei einer Datennetzweiche/einem Switch Datenverkehr auf Schicht 2 des ISO-OSI-Referenzmodells zueinander übertragen können. Die Eingangskommunikationsvorrichtung 2 ist aber darauf ausgelegt, einzelne Schnittstellen oder Schnittstellengruppen zu virtuellen LANs (VLAN) so zusammenzufassen, dass eine Kommunikation auf Schicht 2 des ISO-OSI-Referenzmodells zwischen den Gruppen unterbunden wird und so ein Zustand erzeugt wird, als wären die Teilnehmer der an den Gruppen angeschlossenen Datennetze an gesonderter, getrennter Hardware angeschlossen. Im Ausführungsbeispiel ist die Eingangskommunikationsvorrichtung 2 so konfiguriert, dass eine Datenübertragung auf Schicht 2 des ISO-OSI-Referenzmodells zwischen allen drei Datenübertragungsschnittstellen unterbunden ist.

Die Eingangskommunikationsvorrichtung 2 implementiert mittels ihrer Betriebsmittel und Software eine Tunnelerzeugungsvorrichtung 24. Die Tunnelerzeugungsvorrichtung ist eingerichtet, ein Virtual Private Network (VPN) zwischen der Eingangskommunikationsvorrichtung 2 und der ersten Ausgangskommunikationsvorrichtung 7 zu etablieren, wobei die zwischen der Eingangskommunikationsvorrichtung 2 und der ersten Ausgangskommunikationsvorrichtung 7 zu übertragenden Daten verschlüsselt werden und somit einen sicheren Tunnel als ersten VPN-Tunnel 62 durch das Weitverkehrsnetz bilden.

Die Eingangskommunikationsvorrichtung 2 implementiert mittels ihrer Betriebsmittel und Software ferner eine Paketweiterleitungsvorrichtung 25. Die Paketweiterleitungsvorrichtung 25 implementiert einen Paketfilter, der eine Weiterleitung oder Unterbindung der Weiterleitung von Paketen eines Protokolls aus Schicht 3 oder höher des ISO-OSI-Referenzmodells, im Ausführungsbeispiel das Internetprotokoll IPv4, von einer der drei Datenübertragungsschnittstellen 21, 22, 23 auf eine oder mehrere dieser Datenübertragungsschnittstellen steuert. Hierbei ist die Eingangskommunikationsvorrichtung 2 grundsätzlich so konfiguriert, dass keine Pakete zwischen den Datenübertragungsschnittstellen übertragen werden.

Die Maschinensteuerung 4 ist eine elektronische Datenverarbeitungsvorrichtung, beispielsweise ein Industrie-PC, über den eine Werkzeugmaschine 5 programmiert, bedient und gewartet werden kann und die den Betrieb der Werkzeugmaschine überwacht. Die Maschinensteuerung 4 beinhaltet Betriebsmittel, die eine Fernwartung der Maschinensteuerung 4 erlauben, beispielsweise Systemdienste, die einen Zugriff auf die Maschine mittels des Remote-Desktop-Protokolls gestatten. Hierbei ist nicht notwendigerweise der Einsatz des Remote-Desktop-Protokolls erforderlich. Es können auch andere Protokolle verwendet werden, welche die gleiche Funktionalität bereitstellen, wie beispielsweise die "Independent Computing Architecture" (ICA), "Remote Frame Buffer" (RFB) oder andere. Protokolle wie diese, die den Zugriff auf grafische Benutzungsoberflächen von Betriebssystemen oder ferner Anwendungssoftware auf fernen Computern dadurch erlauben, dass sie Pixelinformationen eines Betriebssystems oder einer Anwendung auf dem fernen Computer in einer Richtung an einen Benutzercomputer und Eingabeinformationen wie Mausbewegung und Tastatureingaben von dem Benutzercomputer in der Gegenrichtung an den fernen Computer übermitteln, werden im folgenden Ferndesktopprotokolle genannt.

Der Servicecomputer 3 ist eine elektronische Datenverarbeitungsvorrichtung, beispielsweise ein Laptop, der zu herkömmlicher Datenverarbeitung verwendbar ist. Der Servicecomputer 3 ist über die zweite Kommunikationsverbindung 31 mit der Eingangskommunikationsvorrichtung 2 verbunden. Der Servicecomputer 3 beinhaltet Betriebsmittel, mit welchen auf Datenverarbeitungseinrichtungen des Maschinenherstellers wie einem Dateiserver 9 zugegriffen werden kann, beispielsweise einem FTP-Client, und Betriebsmittel, über die Wartungsarbeiten auf der Maschinensteuerung 4 vorgenommen werden können, beispielsweise einem Ferndesktop-Client, wie einem RDP-Client, zum Zugriff auf die Bildschirmausgabe der Maschinensteuerung 4. Der Servicecomputer verfügt ferner über Betriebsmittel, um ein Virtual Private Network (VPN) zwischen dem Servicecomputer 3 und einer zweiten Ausgangskommunikationsvorrichtung 8 zu etablieren, wobei die zwischen dem Servicecomputer 3 und der zweiten Ausgangskommunikationsvorrichtung 8 zu übertragenden Daten verschlüsselt werden und somit einen sicheren Tunnel als zweiten VPN-Tunnel 63 durch das Weitverkehrsnetz bilden.

Die erste Ausgangskommunikationsvorrichtung 7 ist eine beim Maschinenhersteller verortete elektronische Datenverarbeitungsvorrichtung, beispielsweise ein Wartungs-VPN-Gateway, die mit dem Weitverkehrsnetz 6 verbunden ist. Die erste Ausgangskommunikationsvorrichtung verfügt über Betriebsmittel, nämlich eine zweite Tunnelerzeugungsvorrichtung 71, aufweist, die es ihr erlauben, als Endpunkt des ersten VPN-Tunnels 62 zu dienen, d.h. die von der ersten Tunnelerzeugungsvorrichtung 24 verschlüsselten Daten zu entschlüsseln und an ein Datennetz des Maschinenherstellers, beispielsweise ein auf Ethernet-Basis betriebenes Kommunikationsnetz weiterzuleiten.

Die zweite Ausgangskommunikationsvorrichtung 8 ist eine beim Maschinenhersteller verortete elektronische Datenverarbeitungsvorrichtung, beispielsweise ein allgemeines VPN-Gateway, die Betriebsmittel, nämlich eine dritte Tunnelerzeugungsvorrichtung 81, aufweist, die ihrerseits erlauben, als Endpunkt des zweiten VPN-Tunnels 63 zu dienen, d.h. von dem Servicecomputer 3 verschlüsselte Daten zu entschlüsseln. Hierbei läuft der zweite VPN-Tunnel 63 teilweise innerhalb des ersten VPN-Tunnels 62 als Tunnel im Tunnel.

Im ersten Ausführungsbeispiel sind die erste Ausgangskommunikationsvorrichtung 7 und die zweite Ausgangskommunikationsvorrichtung 8 als separate Vorrichtungen beschrieben. Diese Trennung der Vorrichtungen ist jedoch nicht erfindungsnotwendig, sodass die erste Ausgangskommunikationsvorrichtung 7 und die zweite Ausgangskommunikationsvorrichtung 8 als eine Vorrichtung verwirklicht werden können.

Im Folgenden wird der Betrieb des ersten Ausführungsbeispiels beschrieben.

Bei einem Wartungsfall, bei dem Wartungspersonal vor Ort bei einem Maschinenbetreiber eingesetzt wird, wird der Servicecomputer 3 an der zweiten Datenübertragungsschnittstelle 22 der Eingangskommunikationsvorrichtung angeschlossen. Durch Selbstkonfigurationsverfahren wie beispielsweise DHCP wird die zweite Kommunikationsverbindung 31 betriebsbereit gestellt.

Hierauf wird über die Paketweiterleitungsvorrichtung 25 die Eingangskommunikationsvorrichtung 2 automatisch oder manuell so konfiguriert, dass die Kommunikation zwischen der ersten Datenübertragungsschnittstelle 21 und der zweiten Datenübertragungsschnittstelle 22 und zwischen der zweiten Datenübertragungsschnittstelle 22 und der dritten Datenübertragungsschnittstelle 23 für bestimmte Datenübertragungsprotokolle, die für die Wartungstätigkeiten erforderlich sind, freigegeben wird. Will das Servicepersonal über den Servicecomputer 3 auf Daten des Datenservers 9 zugreifen um dort Daten auszulesen oder abzuspeichern, wird mittels der ersten Tunnelerzeugungsvorrichtung 24 und der zweiten Tunnelerzeugungsvorrichtung 71 der erste VPN-Tunnel 62 über das Internet 6 zu der ersten Ausgangskommunikationsvorrichtung 7 aufgebaut. Durch diesen ersten VPN-Tunnel 62 wird mittels des Servicecomputers 3 und der dritten Tunnelerzeugungsvorrichtung 81 der zweite VPN-Tunnel 63 von dem Servicecomputer 3 zu der zweiten Ausgangskommunikationsvorrichtung 8 aufgebaut. Hierbei werden die vom Servicecomputer 3 verschlüsselten Daten über die zweite Schnittstelle 22, die Paketweiterleitungsvorrichtung 25, die erste Datenübertragungsschnittstelle 21, die erste Ausgangskommunikationsvorrichtung 7, die zweite Ausgangskommunikationsvorrichtung 8 an den Datenserver 9 übertragen. Die angeforderten Daten werden von dem Datenserver 9 in umgekehrter Reihenfolge an den Servicecomputer 3 übertragen.

Will das Servicepersonal über den Servicecomputer Wartungsarbeiten an der Maschinensteuerung 4 vornehmen, werden die Daten, beispielsweise Daten einer RDP-Sitzung, über die zweite Datenübertragungsschnittstelle 22, die Paketweiterleitungsvorrichtung 25 und die dritte Datenübertragungsschnittstelle 23 an die Maschinensteuerung 4 und umgekehrt übertragen.

Beendet das Servicepersonal die Wartungsarbeiten und trennt die zweite Kommunikationsverbindung 31, wird über die Paketweiterleitungsvorrichtung 25 eine Paketweiterleitung zwischen den Datenübertragungsschnittstellen 21, 22, 23 wieder unterbunden.

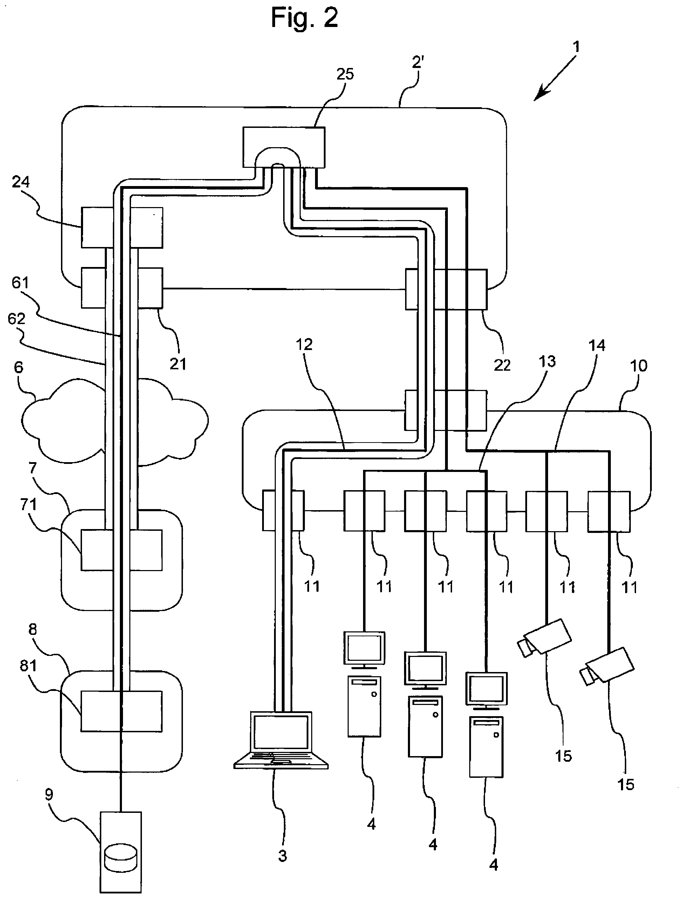

In Fig. 2 ist ein zweites Ausführungsbeispiel des erfindungsgemäßen Systems offenbart. Bestandteile, die im ersten Ausführungsbeispiel und im zweiten Ausführungsbeispiel gleich sind, tragen die gleichen Bezugszeichen und deren Beschreibung wird übergangen.

Die Eingangskommunikationsvorrichtung 2' unterscheidet sich von der Eingangskommunikationsvorrichtung 2 dadurch, dass die dritte Kommunikationsverbindung 41 nicht über eine im ersten Ausführungsbeispiel beschriebene dritte Datenübertragungsschnittstelle 23 erfolgt. Die Eingangskommunikationsvorrichtung 2' ist dazu in der Lage, Datenrahmen eines Protokolls der Schicht 2 des ISO-OSI-Referenzmodells, im Ausführungsbeispiel Protokolle der Ethernet-Familie, mit VLAN-Information so zu markieren, dass die Datenrahmen unterschiedlichen virtuellen Datennetzen, sogenannten VLANS zugeordnet werden können.

Das zweite Ausführungsbeispiel weist ferner eine Datennetzweiche 10, einen sogenannten Switch auf, die eine Vielzahl vierter Datenübertragungsschnittstellen 11 aufweist. Die Datennetzweiche 10 ist dabei in der Lage so konfiguriert zu werden, dass Gruppen von vierten Datenübertragungsschnittstellen so gebildet werden können, dass auf Schicht 2 des ISO-OSI-Referenzmodells keine Daten zwischen den Gruppen übertragen werden und die Gruppen jeweils Teile getrennter virtuelle Datennetze bilden. Die Datennetzweiche 10 ist ferner dazu in der Lage, Datenrahmen eines Protokolls der Schicht 2 des ISO-OSI-Referenzmodells, im Ausführungsbeispiel Protokolle der Ethernet-Familie, mit VLAN-Information so zu markieren, dass die Datenrahmen unterschiedlichen virtuellen Datennetzen, sogenannten VLANS zugeordnet werden können. Die Datennetzweiche 10 ist so konfiguriert, dass mehrere vierte Datenübertragungsschnittstellen 11 zu virtuellen Datennetzen gruppiert sind.

Alternativ kann die Datennetzweiche 10 auch ganz oder teilweise in die Eingangskommunikationsvorrichtung 2' integriert sein.

Eine erste Gruppe aus mindestens einer vierten Datenübertragungsschnittstelle 11 dient als virtuelles Servicedatennetz 12. An die vierte Datenübertragungsschnittstelle 11 des Servicedatennetzes 12 ist der Servicecomputer 3 angeschlossen.

Eine zweite Gruppe aus mindestens einer vierten Datenübertragungsschnittstelle 11 dient als virtuelles Maschinendatennetz 13. An die vierten Datenübertragungsschnittstellen 11 des Maschinendatennetzes 13 sind eine oder mehrere Maschinensteuerungen 4 angeschlossen.

Eine dritte Gruppe aus mindestens einer vierten Datenübertragungsschnittstelle 11 dient als virtuelles Sensordatennetz 14. An die vierten Datenübertragungsschnittstellen 11 des Sensordatennetzes sind Sensoren zur Maschinenüberwachung angeschlossen, insbesondere Kameras 15.

Die Datennetzweiche ist über eine vierte Datenübertragungsschnittstelle 11 mit der zweiten Datenübertragungsschnittstelle 22 verbunden, sodass Daten mittels des Protokolls der Schicht 2 des ISO-OSI-Referenzmodells zwischen der Eingangskommunikationsvorrichtung 2' und der Datenweiche 10 übertragen werden können. Über die Markierung von Rahmen des virtuellen Servicenetzes 12, des virtuellen Maschinennetzes 13 und des virtuellen Sensornetzes 14 mit VLAN-Information bleiben diese virtuellen Netze auch bei der Übertragung über die gemeinsame Datenleitung zwischen Eingangskommunikationsvorrichtung 2 und Datennetzweiche 10 virtuell getrennt, sodass eine Kommunikation zwischen den virtuellen Netzen über die Paketweiterleitungsvorrichtung 25 der Eingangskommunikationsvorrichtung 2 erfolgen muss, solange keine anderen Datenübertragungsvorrichtungen in mehr als einem der virtuell getrennten Netze angeschlossen ist.

Der Betrieb des zweiten Ausführungsbeispiels erfolgt im Wesentlichen wie derjenige des ersten Ausführungsbeispiels, jedoch mit dem Unterschied, dass der Servicecomputer an der vierten Datenübertragungsschnittstelle 11 des Servicedatennetzes 12 angeschlossen wird, und damit nur mittelbar an der zweiten Datenübertragungsschnittstelle angeschlossen ist. Ferner wird über die Paketweiterleitungsvorrichtung 25 die Eingangskommunikationsvorrichtung 2 automatisch oder manuell so konfiguriert, dass die Kommunikation zwischen der ersten Datenübertragungsschnittstelle 21, dem Servicedatennetz 12, dem Maschinendatennetz 13 und dem Sensordatennetz 14 für bestimmte Datenübertragungsprotokolle, die für die Wartungstätigkeiten erforderlich sind, freigegeben wird. Für die Datenübertragung über den zweiten VPN-Tunnel 63 werden die vom Servicecomputer 3 verschlüsselten Daten über das Servicedatennetz 12, über die zweite Schnittstelle 22, die Paketweiterleitungsvorrichtung 25, die erste Datenübertragungsschnittstelle 21, die erste Ausgangskommunikationsvorrichtung 7, die zweite Ausgangskommunikationsvorrichtung 8 an den Datenserver 9 übertragen. Die angeforderten Daten werden von dem Datenserver 9 in umgekehrter Reihenfolge an den Servicecomputer 3 übertragen.

Will das Servicepersonal über den Servicecomputer Wartungsarbeiten an der Maschinensteuerung 4 vornehmen, werden die Daten, beispielsweise Daten einer RDP-Sitzung, über das Servicedatennetz 12, die zweite Datenübertragungsschnittstelle 22, die Paketweiterleitungsvorrichtung 25, die zweite Datenübertragungsschnittstelle 22 und das Maschinennetz 13 an die Maschinensteuerung 4 und umgekehrt übertragen.

Will das Servicepersonal über den Servicecomputer auf Sensoren, insbesondere die Kameras 15 zugreifen, werden die Daten, beispielsweise Daten eines Videostroms, über das Sensordatennetz 14, die zweite Datenübertragungsschnittstelle 22, die Paketweiterleitungsvorrichtung 25, die zweite Datenübertragungsschnittstelle 22 und das Maschinennetz 13 an den Servicecomputer 3 und umgekehrt übertragen.

Die gezeigten und beschriebenen Ausführungsformen sind nicht als abschließende Aufzählung zu verstehen, sondern haben vielmehr beispielhaften Charakter für die Schilderung der Erfindung.

So wird im Ausführungsbeispiel nur eine Datennetzweiche 10 verwendet, um die verschiedenen virtuellen Datennetze zu Gruppieren. Genauso ist es möglich, mehrere oder größere Gruppen über das Schachteln von VLAN-fähigen Datennetzweichen zu bilden.

Ferner sind im zweiten Ausführungsbeispiel die Eingangskommunikationsvorrichtung 2 und die Datennetzweiche 10 gesonderte Bauteile. Die Funktionalität beider Bauteile kann aber auch in einem Bauteil vereint werden.

Die Junktoren ... "und", "oder" und "entweder ... oder" werden in der Bedeutung verwendet, die an die logische Konjunktion, die logische Adjunktion (oft "und/oder"), bzw. die logische Contravalenz angelehnt sind.

## Patentansprüche

1. Maschinensteuerungswartungssystem, das aufweist:
eine Eingangskommunikationsvorrichtung (2) zur Datenübertragung und
eine Maschinensteuerung (4), die eingerichtet ist, eine Werkzeugmaschine (5) zu steuern, wobei die Eingangskommunikationsvorrichtung (2) als Teil eines Telepräsenzsystems beim Maschinenbetreiber verortet ist,
einen Servicecomputer (3), der eingerichtet ist, Wartungsarbeiten an der Maschinensteuerung (4) durchzuführen,
ein zweites, lokales Datennetz (12),
ein drittes, lokales Datennetz,
**dadurch gekennzeichnet, dass** die Eingangskommunikationsvorrichtung (2) aufweist:
einer ersten Datenübertragungsschnittstelle (21), die eingerichtet ist, Daten gemäß einem Protokoll der Schicht 2, Sicherungsschicht, des ISO-OSI-Referenzmodells zu übertragen,
einer zweiten Datenübertragungsschnittstelle (22), die eingerichtet ist, Daten gemäß einem Protokoll der Schicht, Sicherungsschicht, des ISO-OSI-Referenzmodells zu übertragen,
eine erste Tunnelerzeugungsvorrichtung (24), die eingerichtet ist, zur Übertragung bestimmte Daten als VPN-Tunnel zu verschlüsseln und zu entschlüsseln, und
eine Paketweiterleitungsvorrichtung (25), die eingerichtet ist, Pakete eines Protokolls der Schicht 3 oder höher des ISO-OSI-Referenzmodells zwischen verschiedenen Datenübertragungsnetzen zu übertragen oder deren Übertragung zu unterbinden; wobei
die Eingangskommunikationsvorrichtung (2) dazu eingerichtet ist, wahlweise Datenverkehr auf Schicht 2 des ISO-OSI Referenzmodells wahlweise zu übertragen oder eine Übertragung von Datenverkehr auf Schicht 2 des ISO-OSI Referenzmodells zu unterbinden,
die Eingangskommunikationsvorrichtung (2) über die erste Datenübertragungsschnittstelle (21) mit einem ersten Datennetz, nämlich einem Weitverkehrsdatennetz (6) verbindbar ist, über das die Eingangskommunikationsvorrichtung (2) mit einer ersten Ausgangskommunikationsvorrichtung (7) über eine erste Kommunikationsverbindung (61) zwischen der ersten Datenübertragungsschnittstelle (21) und der ersten Ausgangskommunikationsvorrichtung (7) verbindbar ist, so dass über die erste Kommunikationsverbindung (61) über einen ersten VPN-Tunnel (62) Daten zwischen der Eingangskommunikationsvorrichtung (2) und der ersten Ausgangskommunikationsvorrichtung (7) übermittelt werden können,
die Eingangskommunikationsvorrichtung (2) über die zweite Datenübertragungsschnittstelle (22) mit dem zweiten lokalen Datennetz (12), das ausschließlich zwei Datenkommunikationsteilnehmer verbindet, verbindbar ist, über das der Servicecomputer (3), mit der Eingangskommunikationsvorrichtung (2) über eine zweite Kommunikationsverbindung (31) zwischen der zweiten Datenübertragungsschnittstelle (22) und dem Servicecomputer (3) verbindbar ist, sodass Daten zwischen dem Servicecomputer (3) und der Eingangskommunikationsvorrichtung (2) übertragbar sind, wobei das zweite Datennetz (12) lediglich den Servicecomputer (3) und die Eingangskommunikationsvorrichtung (2) verbindet,
das erste Datennetz und das zweite Datennetz (12) durch Unterbinden der Übertragung von Datenverkehr auf Schicht 2 des ISO-OSI Referenzmodells zwischen der ersten Datenübertragungsschnittstelle (21) und der zweiten Datenübertragungsschnittstelle (22) voneinander getrennt sind,
die Paketweiterleitungsvorrichtung (2) eingerichtet ist, Datenpakete des Protokolls der Schicht 3 oder höher des ISO-OSI-Referenzmodells von und zu dem Servicecomputer (3) über und von dem ersten VPN-Tunnel (62) weiterzuleiten, dann wenn der Servicecomputer (3) mit der Eingangskommunikationsvorrichtung (2) verbunden ist,
die Maschinensteuerung (4) mit der Eingangskommunikationsvorrichtung (2) über ein drittes lokales Datennetz verbunden ist, sodass Daten zwischen der Maschinensteuerung (4) und der Eingangskommunikationsverbindung (2) übertragbar sind,
die erste Tunnelerzeugungsvorrichtung (24) eingerichtet ist, über die erste Kommunikationsverbindung (61) zu übertragende Daten als das erste VPN zu verschlüsseln und zu entschlüsseln, und
die Paketweiterleitungsvorrichtung (25) eingerichtet ist, Datenpakete des Protokolls der Schicht 3 oder höher des ISO-OSI-Referenzmodells über die erste Datenübertragungsschnittstelle (21) und die zweite Datenübertragungsschnittstelle (22) weiterzuleiten, und
der Servicecomputer (3) eine vierte Tunnelerzeugungsvorrichtung aufweist, die eingerichtet ist, Daten, die zur Übertragung zwischen dem Servicecomputer (3) und einer zweiten Ausgangskommunikationsvorrichtung (7) bestimmt sind, als zweiten VPN-Tunnel (63) zu verschlüsseln, so dass die Datenübertragung des zweiten VPN-Tunnels (63) als Teil der Datenübertragung im ersten VPN-Tunnels (62) erfolgt.

2. Das Maschinensteuerungswartungssystem gemäß Anspruch 1, wobei
die Eingangskommunikationsvorrichtung (2) ferner mit einem dritten Datennetz (13) verbunden ist, über das über eine dritte Kommunikationsverbindung (41) die Maschinensteuerung (4) oder mehrere Maschinensteuerungen (4) mit der Eingangskommunikationsvorrichtung (2) verbunden ist, sodass Daten zwischen der Maschinensteuerung (4) und der Eingangskommunikationsvorrichtung (2) übertragbar sind,
das dritte Datennetz (13) von dem ersten Datennetz und dem zweiten Datennetz (12) virtuell getrennt ist, und
die Paketweiterleitungsvorrichtung (25) eingerichtet ist, Datenpakete des Protokolls der Schicht 3 oder höher des ISO-OSI-Referenzmodells zwischen dem Servicecomputer (3) und der Maschinensteuerung (4) weiterzuleiten, dann wenn der Servicecomputer (3) mit der Eingangskommunikationsvorrichtung (2) verbunden ist.

3. Das Maschinensteuerungswartungssystem gemäß Anspruch 2, wobei
die Eingangskommunikationsvorrichtung (2) ferner mit einem vierten Datennetz (14) verbunden ist, über das über eine vierte Kommunikationsverbindung Sensoren, insbesondere Kameras (15) mit der Eingangskommunikationsvorrichtung (2) verbunden ist, sodass Daten zwischen den Sensoren (15) und der Eingangskommunikationsvorrichtung (2) übertragbar sind,
das vierte Datennetz (14) von dem ersten Datennetz, dem zweiten Datennetz (12) und dem dritten Datennetz (13) virtuell getrennt ist, und
die Paketweiterleitungsvorrichtung (25) eingerichtet ist, Datenpakete des Protokolls der Schicht 3 oder höher des ISO-OSI-Referenzmodells zwischen dem Servicecomputer (3) und den Sensoren (15) weiterzuleiten, dann wenn der Servicecomputer (3) mit der Eingangskommunikationsvorrichtung (2) verbunden ist.

4. Das Maschinensteuerungswartungssystem gemäß einem der Ansprüche 1 bis 3, das ferner eine dritte Datenübertragungsschnittstelle (23) aufweist, wobei
die Eingangskommunikationsvorrichtung (2) eingerichtet ist, auf Schicht 2 des ISO-OSI-Referenzmodells keine Daten zwischen der dritten Datenübertragungsschnittstelle (23) und der ersten Datenübertragungsschnittstelle (21) oder der zweiten Datenübertragungsschnittstelle (22) zu übertragen,
die Maschinensteuerung (4) über die dritte Kommunikationsverbindung (41) über die dritte Datenübertragungsschnittstelle (23) mit der Eingangskommunikationsvorrichtung (2) verbunden ist, und
die Paketweiterleitungsvorrichtung (25) eingerichtet ist, Datenpakete des Protokolls der Schicht 3 oder höher des ISO-OSI-Referenzmodells von und zu dem Servicecomputer (3) über die und von der dritten Datenübertragungsschnittstelle (23) weiterzuleiten.

5. Das Maschinensteuerungswartungssystem gemäß einem der Ansprüche 1 bis 4, das ferner eine Datennetzweiche (10) mit einer Vielzahl von vierten Datenübertragungsschnittstellen (11) aufweist,
wobei
die Datennetzweiche (10) so konfigurierbar ist, dass Gruppen von vierten Datenübertragungsschnittstellen (11) so gebildet werden können, dass auf Schicht 2 des ISO-OSI-Referenzmodells keine Daten zwischen den Gruppen übertragen werden und die Gruppen jeweils getrennte virtuelle Datennetze (12, 13, 14) bilden,
die Datennetzweiche (10) und die Eingangskommunikationsvorrichtung (2) eingerichtet sind, Datenrahmen des Protokolls der Schicht 2 des ISO-OSI-Referenzmodells mit VLAN-Information so zu markieren, dass die Datenrahmen einer Gruppe von vierten Datenübertragungsschnittstellen (11) zugeordnet werden können,
die Datennetzweiche (10) und die Eingangskommunikationsvorrichtung (2) über die zweite Datenübertragungsschnittstelle (22) und eine vierte Datenübertragungsschnittstelle (11) verbunden sind, sodass Daten zwischen der Datennetzweiche (10) und der Eingangskommunikationsvorrichtung (2) übertragbar sind, und
die Datennetzweiche (10) und die Eingangskommunikationsvorrichtung (2) so konfiguriert sind, dass eine erste Gruppe aus mindestens einer vierten Datenübertragungsschnittstelle (11) als ein erstes virtuelles Datennetz (12) eingerichtet ist, über die der Servicecomputer (3) mit der Datennetzweiche (10) und dadurch mit der Eingangskommunikationsvorrichtung (2) verbindbar ist.

6. Das Maschinensteuerungswartungssystem nach Anspruch 5, wobei die Datennetzweiche (10) und die Eingangskommunikationsvorrichtung (2) so konfiguriert sind, dass eine zweite Gruppe aus mindestens einer vierten Datenübertragungsschnittstelle (11) als zweites virtuelles Datennetz (13) eingerichtet ist, über die die Maschinensteuerung (4) oder weitere Maschinensteuerungen mit der Datennetzweiche (10) und dadurch mit der Eingangskommunikationsvorrichtung (2) verbindbar sind.

7. Das Maschinensteuerungswartungssystem nach Anspruch 6, wobei die Datennetzweiche (10) und die Eingangskommunikationsvorrichtung (2) so konfiguriert sind, dass eine dritte Gruppe aus mindestens einer vierten Datenübertragungsschnittstelle (11) eingerichtet ist, über die die Sensoren, insbesondere Kameras (15) mit der Datennetzweiche (10) und dadurch mit der Eingangskommunikationsvorrichtung (2) verbindbar sind.

8. Das Maschinensteuerungswartungssystem nach einem der Ansprüche 1 bis 7, das ferner die erste Ausgangskommunikationsvorrichtung (7) aufweist, die über die erste Kommunikationsverbindung (61) mit der Eingangskommunikationsvorrichtung (2) verbindbar ist, sodass Daten zwischen der Eingangskommunikationsvorrichtung (2) und der ersten Ausgangskommunikationsvorrichtung übertragbar (7) sind, wobei;
die erste Ausgangskommunikationsvorrichtung (7) mit einer zweiten Tunnelerzeugungsvorrichtung (71) versehen ist, die eingerichtet ist, zur Übertragung bestimmte Daten als VPN-Tunnel zu verschlüsseln und zu entschlüsseln, so dass über den ersten VPN-Tunnel (62) Daten zwischen der Eingangskommunikationsvorrichtung (2) und der ersten Ausgangskommunikationsvorrichtung (7) übermittelt werden können.

9. Das Maschinensteuerungswartungssystem nach Anspruch 8, das ferner eine zweite Ausgangskommunikationsvorrichtung (8) aufweist, die mit der Eingangskommunikationsvorrichtung (2) verbunden ist, sodass Daten zwischen der ersten Ausgangskommunikationsvorrichtung (7) und der zweiten Ausgangskommunikationsvorrichtung (8) übertragbar sind, wobei
die zweite Ausgangskommunikationsvorrichtung (8) mit einer dritten Tunnelerzeugungsvorrichtung (81) versehen ist, die eingerichtet ist, zur Übertragung bestimmte Daten als VPN-Tunnel zu verschlüsseln und zu entschlüsseln, so dass über den zweiten VPN-Tunnel (63) Daten zwischen dem Servicecomputer (3) und der zweiten Ausgangskommunikationsvorrichtung (8) übermittelt werden können.

10. Verfahren zur Maschinensteuerungswartung, das die Schritte aufweist:
Bereitstellen eines ersten Datennetzes, nämlich eines Weitverkehrsdatennetzes, das über eine erste Datenübertragungsschnittstelle (21), die eingerichtet ist, Daten gemäß einem Protokoll der Schicht 2 (Sicherungsschicht) des ISO-OSI-Referenzmodells zu übertragen, mit einer Eingangskommunikationsvorrichtung verbunden ist,
Bereitstellen eines zweiten Datennetzes (12), nämlich eines lokalen Datennetzes, das ausschließlich zwei Datenkommunikationsteilnehmer verbindet und das über eine zweite Datenübertragungsschnittstelle (22), die eingerichtet ist, Daten gemäß einem Protokoll der Schicht 2 (Sicherungsschicht) des ISO-OSI-Referenzmodells zu übertragen, mit der Eingangskommunikationsvorrichtung verbunden ist,
Bereitstellen eines dritten Datennetzes, nämlich eines lokalen Datennetzes, über das eine oder mehrere Maschinensteuerungen mit der Eingangskommunikationsvorrichtung verbunden sind,
wobei die Eingangskommunikationsvorrichtung (2) als Teil eines Telepräsenzsystems beim Maschinenbetreiber verortet ist und dazu eingerichtet ist, Datenverkehr auf Schicht 2 des ISO-OSI Referenzmodells wahlweise zu übertragen oder eine Übertragung von Datenverkehr auf Schicht 2 des ISO-OSI Referenzmodells zu unterbinden, und
das erste Datennetz, das zweite Datennetz (12) und das dritte Datennetz durch Unterbinden der Übertragung von Datenverkehr auf Schicht 2 des ISO-OSI Referenzmodells zwischen der ersten Datenübertragungsschnittstelle (21) und der zweiten Datenübertragungsschnittstelle (22) voneinander getrennt sind,
Verbinden eines Servicecomputers (3) mit dem zweiten Datennetz (12) über eine zweite Kommunikationsverbindung (31) zwischen der zweiten Datenübertragungsschnittstelle (22) und dem Servicecomputer (3), wobei das zweite Datennetz (12) lediglich den Servicecomputer (3) und die Eingangskommunikationsvorrichtung (2) verbindet,
Übermitteln von ersten Daten zwischen dem Servicecomputer und der Eingangskommunikationsvorrichtung,
Übermitteln von zweiten Daten zwischen dem Servicecomputer und der Maschinensteuerung,
Übermitteln und Verschlüsseln/Entschlüsseln der ersten Daten zwischen der Eingangskommunikationsvorrichtung und einer ersten Ausgangskommunikationsvorrichtung als ersten VPN-Tunnel über eine erste Kommunikationsverbindung (61) zwischen der ersten Datenübertragungsschnittstelle (21) und der ersten Ausgangskommunikationsvorrichtung (7), und
Übermitteln und Verschlüssen der ersten Daten zwischen dem Servicecomputer und einer zweiten Ausgangskommunikationsvorrichtung als zweiten VPN-Tunnel über den ersten VPN-Tunnel.

11. Das Verfahren gemäß Anspruch 10, das ferner die Schritte aufweist:
Authentifizieren des Servicecomputers gegenüber der Eingangskommunikationsvorrichtung.

## Claims

1. A machine controller maintenance system, comprising:
an inbound communication device (2) for a data transmission, and
a machine controller (4), configured to control a machine tool (5), wherein the inbound communication device (2) is located at a machine operator as part of a telepresence system,
a service computer (3), configured to perform maintenance tasks at the machine controller (4),
a second, local network (12),
a third, local network,
**characterized in that**
the inbound communication device (2) comprises:
a first data transmission interface (21), configured to transmit data according to a protocol of layer 2, data link layer, of the ISO-OSI-reference model,
a second data transmission interface (22), configured to transmit data according to a protocol of layer 2, data link layer, of the ISO-OSI-reference model,
a first tunnel generating device (24) configured to encrypt and decrypt as a VPN-tunnel data determined to be transmitted, and
a packet forwarding device (25) configured to transmit packets of a protocol of layer 3 or higher or the ISO-OSI-reference model between different data transmission networks or to prevent transmission thereof; wherein
the inbound communication device (2) is configured alternatively to transmit data traffic on layer 2 of the ISO-OSI-reference model or alternatively to prevent transmission of data traffic at layer 2 of the ISO-OSI-reference model,
the inbound communication device (2) is connectable with a first data transmission network, namely a wide area network (6) via the first data transmission interface (21), via that the inbound communication device (2) is connectable with a first outbound communication device (7) via a first communication connection (61) between the first data transmission interface (21) and the first outbound communication device (7), such that data can be transmitted between the inbound communication device (2) and the first outbound communication device (7) via the first communication connection (61) via a first VPN-tunnel (62),
the inbound communication device (2) is connectable with the second local data network (12) via the second data transmission interface (2), the data network (12) only connecting two data communication participants, via that the service computer (3) is connectable to the inbound data communication device (2) via a second communication connection (31) between the second data transmission interface (22) and the service computer (3), such that data between the service computer (3) and the inbound communication device (2) are transmissible, wherein the second data network (12) only connects the service computer (3) and the inbound communication device (2),
the first data network and the second data network (12) are mutually separated by prevention of the transmission of data traffic at layer 2 of the ISO-OSI-reference model between the first data transmission interface (21) and the second data transmission interface (22),
the packet forwarding device (2) is configured to forward data packets of the protocol of layer 3 or higher of the ISO-OSI-reference model from and to the service computer (3) via and from the first VPN-tunnel (62), if the service computer (3) is connected to the inbound communication device (2),
the machine control (4) is connected to the inbound communication device (2) via a third local data network, such that data is transmissible between the machine controller (4) and the inbound communication device (2),
the first tunnel generating device (24) is configured to encrypt and decrypt as the first VPN-data to be transmitted via the first communication connection (61), and
the packet forwarding device (25) is configured to forward data packets of the protocol of layer 3 or higher of the ISO-OSI-reference model via the first data transmission interface (21) and the second data transmission interface (22), and
the service computer (3) comprises a fourth tunnel generating device configured to encrypt as a second VPN-tunnel (63) data determined to be transmitted between the service computer (3) and a second outbound communication device (7), such that the data transmission of the second VPN-tunnel (63) occurs as part of data transmission in the first VPN-tunnel (62).

2. The machine controller maintenance system according to claim 1, wherein
the inbound communication device (2) further is connected to a third data network (13), via that the machine controller (4) or multiple machine controllers (4) are connected with the inbound communication device (2) via a third communication connection (41), such that data between the machine controller (4) and the inbound communication device (2) are transmissible,
the third data network (13) is virtually separated from the first data network and the second data network (12), and
the packet forwarding device (25) is configured to forward data packets of the protocol of layer 3 or higher of the ISO-OSI-reference model between the service computer (3) and the machine control (4), if the service computer (3) is connected to the inbound communication device (2).

3. The machine controller maintenance system according to claim 2, wherein
the inbound communication device (2) further is connected to a fourth data network (14), via that sensors, in particular cameras (15), are connected with the inbound communication device (2) via a fourth communication connection, such that data between sensors (15) and the inbound communication device (2) are transmissible,
the fourth data network (14) is virtually separated from the first data network, the second data network (12) and the third data network (13), and
the packet forwarding device (25) is configured, to forward data packets of the protocol of layer 3 or higher of the ISO-OSI-reference model between the service computer (3) and the sensors (15), if the service computer (3) is connected with the inbound communication device (2).

4. A machine controller maintenance system according to one of claims 1 to 3, further comprising a third data transmission interface (23), wherein
the inbound communication device (2) is configured, to transmit no data on layer 2 of the ISO-OSI-reference model between the third data transmission interface (23) and the first data transmission interface (21) or the second data transmission interface (22),
the machine controller (4) is connected with the inbound communication device (2) via the third communication connection (41) via the third data transmission interface (23), and
the packet forwarding device (25) is configured, to forward data packets of the protocol of the layer 3 or higher of the ISO-OSI-reference model from and to the service computer (3) via the and from the third data transmission interface (23).

5. The machine controller maintenance system according to one of claims 1 to 4, further comprising a network switch (10) having a plurality of fourth data transmission interfaces (11),
wherein
the network switch (10) is configurable such that groups of fourth data transmission interfaces (11) can be formed such that no data is transmitted between the groups on layer 2 of the ISO-OSI-reference model and the groups form separated virtual networks (12, 13, 14), respectively,
the network switch (10) and the inbound communication device (2) are configured to mark data frames of the protocol of layer 2 of the ISO-OSI-reference model with VLAN-information, such that the data frames may be allocated to a group of fourth data transmission interfaces (11),
the network switch (10) and the inbound communication device (2) are connected via the second data transmission interface (22) and a fourth data transmission interface (11), such that data between the network switch (10) and the inbound communication device (2) is transmissible, and
the network switch (10) and the inbound communication device (2) are configured such that a first group of at least one fourth data transmission interface (11) is configured as a first virtual data network (12), via that the service computer (3) is connectable to the network switch (10) and by that with the inbound communication device (2).

6. The machine controller maintenance system according to claim 5, wherein the network switch (10) and the inbound communication device (2) are configured such that a second group of at least one fourth data transmission interface (11) is configured as a second virtual data network (13), via that the machine controller (4) or further machine controllers are connectable to the network switch (10) and by that with the inbound communication device (2).

7. The machine controller maintenance system according to claim 6, wherein the network switch (10) and the inbound communication device (2) are configured such that a third group of at least one fourth data transmission interface (11) is configured, via which the sensors, in particular cameras (15), are connectable with the network switch (10) and by that with the inbound communication device (2).

8. The machine controller maintenance system according to one of claims 1 to 7, further comprising the first outbound communication device (7), connectable to the inbound communication device (2) via the first communication connection (61), such that data between the inbound communication device (2) and the first outbound communication device (7) are transmissible, wherein
the first outbound communication device (7) is provided with a second tunnel generating device (71), configured to encrypt and decrypt as a VPN-tunnel, data determined to be transmitted, such that data can be transmitted between the inbound communication device (2) and the first outbound communication device (7) via the VPN-tunnel (62).

9. The machine controller maintenance system according to claim 8, further comprising a second outbound communication device (8) connected to the inbound communication device (2) such that data between the first outbound communication device (7) and the second outbound communication device (8) is transmissible, wherein
the second outbound communication device (8) is provided with a third tunnel generating device (81), configured to encrypt and decrypt as a VPN-tunnel data determined to be transmitted, such that data can be transmitted between the service computer (3) and the second outbound communication (8) via the second VPN-tunnel (63).

10. A method for machine controller maintenance, comprising the steps:
providing a first data network, namely a wide area network, connected with an inbound communication device via a first data transmission interface (21) configured to transmit data according to a protocol of layer 2 (data link layer) of the ISO-OSI-reference model,
providing a second data network (12), namely a local network, only connecting two data communication participants and connected with the inbound communication device via a second data transmission interface (22) configured to transmit data according to a protocol of layer 2 (data link layer) of the ISO-OSI-reference model,
providing a third data network, namely a local data network, via that one or more machine controllers are connected with the inbound communication device,
wherein the inbound communication device (2) is located at a machine operator as part of a telepresence system and is configured alternatively to transmit data traffic on layer 2 of the ISO-OSI-reference model, or alternatively to prohibit transmission of data traffic on layer 2 of the ISO-OSI-reference model, and
the first data network, the second data network (12) and the third data network are mutually separated by prohibiting the transmission of data traffic on layer 2 of the ISO-OSI-reference material between the first data transmission interface (21) and the second data transmission interface (22),
connecting a service computer (3) with the second data network (12) via a second communication connection (31) between the second data transmission interface (22) and the service computer (3), wherein the second data network (12) only connects the service computer (3) and the inbound communication device (2),
transmitting first data between the service computer and the inbound communication device,
transmitting second data between the service computer and the machine control,
transmitting and encrypting/decrypting the first data between the inbound communication device and a first outbound communication device as a first VPN-tunnel via a first communication connection (61) between the first data transmission interface (21) and the first outbound communication device (7), and
transmitting and encrypting the first data between the service computer and a second outbound communication device as a second VPN-tunnel via the first VPN-tunnel.

11. The method according to claim 10, further comprising the steps:
authentification of the service computer with respect to the inbound communication device.

## Revendications

1. Système de maintenance de la commande d'une machine comportant :
- un dispositif de communication d'entrée (2) pour la transmission de données, et
- une commande de machine (4) conçue pour commander une machine-outil (5), le dispositif de communication d'entrée (2) étant situé comme partie d'un système de télé-présence chez le gestionnaire des machines,
- un ordinateur de service (3) conçu pour effectuer des travaux de maintenance sur la commande de machine (4),
- un second réseau local de données (12),
- un troisième réseau local de données,
système **caractérisé en ce que**
le dispositif de communication d'entrée comporte
- une première interface de transmission de données (21) conçue pour transmettre les données selon un protocole de la couche 2, (couche de sécurité) du modèle de référence ISO-OSI,
- une seconde interface de transmission de données (22) conçue pour transmettre les données selon un protocole de la couche 2, (couche de sécurité), du modèle de référence ISO-OSI,
- un premier dispositif de réalisation de tunnel (24) conçu pour transmettre des données déterminées comme tunnel-VPN à crypter et à décrypter, et
- un dispositif de transmission de paquets (25) conçu pour transmettre des paquets d'un protocole de la couche 3 ou plus, du modèle de référence ISO-OSI entre les différents réseaux de transmission de données ou d'interdire leur transmission, dispositif dans lequel,
- le dispositif de communication d'entrée (2) est conçu pour transmettre sélectivement le trafic de données de la couche 2 au modèle de référence ISO-OSI (26) ou d'interdire la transmission de l'échange de données de la couche 2 du modèle de référence ISO-OSI,
- le dispositif de communication d'entrée (2) pouvant être relié par la première interface de transmission de données (21) à un premier réseau, à savoir un réseau étendu d'échange de données (6), par lequel le dispositif de communication d'entrée (2) peut être relié à un premier dispositif de communication de sortie (7) par une première liaison de communication (61) entre la première interface de transmission de données (21) et le premier dispositif de communication de sortie (7), de façon que par la première liaison de communication (61) par un premier tunnel VPN (62), des données puissent être transmises entre le dispositif de communication d'entrée (2) et le premier dispositif de communication de sortie (7),
- le dispositif de communication d'entrée (2) étant relié par la seconde interface de transmission de données (22) au second réseau de données (12), à savoir un réseau local, qui relie exclusivement deux participants à une communication de données, et qui permet de relier l'ordinateur de service (3) conçu pour effectuer des travaux de maintenance sur la commande de machine (4), au dispositif de communication d'entrée (2) par une seconde liaison de communication (31) entre la seconde interface de transmission de données (22) et l'ordinateur de service (3) de façon à transmettre les données entre l'ordinateur de service (3) et le dispositif de communication d'entrée (2), le second réseau de données (12) reliant uniquement l'ordinateur de service (3) et le dispositif de communication d'entrée (2),
- le premier réseau de données et le second réseau de données (12) étant séparés l'un de l'autre par l'interdiction de la transmission de l'échange de données sur la couche 2 du modèle de référence ISO-OSI, entre la première interface de transmission de données (21) et la seconde interface de transmission de données (22),
- le dispositif de transmission de paquets (2) étant en outre conçu pour échanger les paquets de données du protocole de la couche 3 ou plus, du modèle de référence ISO-OSI avec l'ordinateur de service (3) par et à travers le premier tunnel VPN (62) lorsque l'ordinateur de service (3) est relié au dispositif de communication d'entrée (2),
- la commande de machine (4) étant reliée au dispositif de communication d'entrée (2) par un réseau de données local, pour transmettre les données entre la commande de machine (4) et la liaison de communication d'entrée (2),
- le premier dispositif de génération de tunnel (24) étant conçu pour crypter et décrypter avec la première liaison de communication (61), les données à transmettre comme premier VPN (réseau virtuel privé), et
- le dispositif de transmission de paquets (25) étant conçu pour transmettre des paquets de données du protocole de la couche 3 ou plus, du modèle de référence ISO-OSI par la première interface de transmission de données (21) et la seconde interface de transmission de données (22), et
- l'ordinateur de service (3) a un quatrième dispositif de génération de tunnel conçu pour la transmission de données entre l'ordinateur de service (3) et le second dispositif de communication de sortie (7), pour les crypter comme second tunnel VPN (63), de façon à transmettre des données du second tunnel VPN (63) comme partie de la transmission des données dans le premier tunnel VPN (62).

2. Système de maintenance de la commande d'une machine selon la revendication 1, dans lequel
le dispositif de communication d'entrée (2) est en outre relié à un troisième réseau de données (13) qui relie par une troisième liaison de communication (41), la commande de machine (4) ou plusieurs commandes de machine (4) au dispositif de communication d'entrée (2) pour que les données puissent être transmises entre la commande de machine (4) et le dispositif de communication d'entrée (2),
- le troisième réseau de données (13) étant séparé virtuellement du premier réseau de données et du second réseau de données (12) et,
- le dispositif de transmission de paquets (25) étant conçu pour transmettre des paquets de données du protocole de la couche 3 ou plus, du modèle de référence ISO-OSI entre l'ordinateur de service (3) et la commande de machine (4) lorsque l'ordinateur de service (3) est relié au dispositif de communication d'entrée (2).

3. Dispositif de maintenance de la commande d'une machine selon la revendication 2,
**caractérisé en ce que**
le dispositif de communication d'entrée (2) est en outre relié à un quatrième réseau de données (14) qui relie, par une quatrième liaison de communication, les capteurs, notamment les caméras (15) au dispositif de communication d'entrée (2) pour transmettre les données entre les capteurs (15) et le dispositif de communication d'entrée (2),
- le quatrième réseau de données (14) étant séparé virtuellement du premier réseau de données, du second réseau de données (12) et du troisième réseau de données (13), et
- le dispositif de transmission de paquets (25) étant conçu pour transmettre des paquets de données du protocole de la couche 3 ou plus du modèle de référence ISO-OSI, entre l'ordinateur de service (3) et les capteurs (15) lorsque l'ordinateur de service (3) est relié au dispositif de communication d'entrée (2).

4. Système de maintenance de la commande d'une machine selon l'une des revendications 1 à 3, comportant en outre une troisième interface de transmission de données (23),
- le dispositif de communication d'entrée (2) étant conçu pour ne plus transmettre de données sur la couche 2 du modèle de référence ISO-OSI, entre la troisième interface de transmission de données (23) et la première interface de transmission de données (21) ou la seconde interface de transmission de données (22),
- la commande de machine (4) étant reliée par la troisième liaison de communication (41), par la troisième interface de transmission de données (23) au dispositif de communication d'entrée (2), et
- le dispositif de transmission de paquets (25) étant conçu pour transmettre les paquets de données du protocole de la couche 3 ou plus, du modèle de référence ISO-OSI à partir ou vers l'ordinateur de service (3) par la troisième interface de transmission de données (23).

5. Système de maintenance de la commande d'une machine selon l'une des revendications 1 à 4, qui comporte en plus un aiguillage de données (10) avec un grand nombre de quatrièmes interfaces de transmission de données (11),
système dans lequel
l'aiguillage de données (10) est configuré pour réaliser des groupes de quatrièmes interfaces de transmission de données (11) pour ne transmettre sur la couche 2 du modèle de référence ISO-OSI, aucune donnée entre les groupes qui forment respectivement des réseaux de données, virtuels, distincts (12, 13, 14),
- l'aiguillage de données (10) et le dispositif de communication d'entrée (2) étant conçus pour marquer des trames de données du protocole de la couche 2 du modèle de référence ISO-OSI avec information VLAN pour que les trames de données puissent être associées à un groupe de quatre interfaces de transmission de données (11),
- l'aiguillage de réseau de données (10) et le dispositif de communication d'entrée (2) étant reliés par la seconde interface de transmission de données (22) et une quatrième interface de transmission de données (11) pour que les données puissent être transmises entre le quatrième aiguillage de données (10) et le dispositif de communication d'entrée (2), et
- l'aiguillage de réseau de données (10) et le dispositif de communication d'entrée (2) étant configurés pour qu'un premier groupe composé d'au moins une quatrième interface de transmission de données (11) soit organisé comme quatrième réseau de données, virtuels (12) reliant les ordinateurs de service (3) à l'aiguillage de données (10) et ainsi au dispositif de communication d'entrée (2).

6. Système de maintenance de la commande d'une machine selon la revendication 5
**caractérisé en ce que**
l'aiguillage de données (10) et le dispositif de communication d'entrée (2) sont configurés pour réaliser un second groupe composé d'au moins une quatrième interface de transmission de données (11) comme second réseau virtuel de données (13) reliant la commande de machine (4) ou d'autres commandes de machine à l'aiguillage de réseau de données (10) et ainsi au dispositif de communication d'entrée (2).

7. Système de maintenance de la commande d'une machine selon la revendication 6,
**caractérisé en ce que**
l'aiguillage de réseau de données (10) et le dispositif de communication d'entrée (2) sont configurés pour réaliser un troisième groupe composé d'au moins une quatrième interface de transmission de données (11) qui relie les capteurs, notamment les caméras (15) à l'aiguillage de réseau de données (10) et ainsi au dispositif de communication d'entrée (2).

8. Système de maintenance de la commande d'une machine selon l'une des revendications 1 à 7 qui, en outre, comporte le premier dispositif de communication de sortie (7) qui peut être relié par la première liaison de communication (61) au dispositif de communication d'entrée (2) pour transmettre les données entre le dispositif de communication d'entrée (2) et le premier dispositif de communication de sortie (7), et dans lequel
- le premier dispositif de communication de sortie (7) est muni d'un second dispositif générant un tunnel (71) conçu pour transmettre certaines données, comme tunnel VPN, avec cryptage et décryptage de façon que le premier tunnel VPN (62) puisse transmettre des données entre le dispositif de communication d'entrée (2) et le premier dispositif de communication de sortie (7).

9. Système de maintenance de la commande d'une machine selon la revendication 8,
**caractérisé en outre en ce qu'**
il comporte un second dispositif de communication de sortie (8) relié au dispositif de communication d'entrée (2) pour transmettre les données entre le premier dispositif de communication de sortie (7) et le second dispositif de communication de sortie (8),
- le second dispositif de communication de sortie (8) étant muni d'un troisième dispositif de génération de tunnel (81) pour transmettre certaines données comme données VPN à crypter et décrypter de façon à transmettre par le second tunnel VPN (63), des données entre l'ordinateur de service (3) et le second dispositif de communication de sortie (8).

10. Procédé de maintenance de la commande de machine qui comprend les étapes suivantes consistant à :
- utiliser un premier réseau de données à savoir un réseau de données de circulation, étendu, conçu pour transmettre avec une première interface de transmission (21) des données selon un protocole de la couche 2 (couche de sécurité) du modèle de référence ISO-OSI, pour être reliées à un dispositif de communication d'entrée,
- utiliser un second réseau de données (12), à savoir un réseau local de données exclusivement relié à deux participants de communication de données et qui peut transmettre par une seconde interface de transmission de données (22) conçue pour transmettre des données selon le protocole de la couche 2 (couche de sécurité) du modèle de référence ISO-OSI, au dispositif de communication d'entrée,
- fournir un troisième réseau de données, à savoir un réseau local de données reliant une ou plusieurs commandes de machines au dispositif d'entrée,
- localiser le dispositif de communication d'entrée (2) comme partie d'un système de téléprésence dans le cas d'un gestionnaire de machine et conçu pour transmettre l'échange de données de la couche 2 du module de référence ISO-OSI, au choix, ou de laisser la transmission à la couche 2 du modèle de référence ISO-OSI, et
- interdire au premier réseau de données, au second réseau de données (12), au troisième réseau de données, de transmettre l'échange de données de la couche 2 du modèle de référence ISO-OSI entre la première interface de transmission de données (21) et la seconde interface de transmission de données (22) qui sont séparées,
- relier un ordinateur de service (3) au second réseau de transmission de données (12) par une seconde liaison de communication (31) entre la seconde interface de transmission de données (22) et l'ordinateur de service (3), le second réseau de données (12) reliant uniquement l'ordinateur de service (3) et le dispositif de communication d'entrée (2),
- transmettre les premières données entre l'ordinateur de service et le dispositif de communication d'entrée,
- transmettre les secondes données entre l'ordinateur de service et la commande de machine,
- transmettre et crypter / décrypter les premières données entre le dispositif de communication d'entrée et un premier dispositif de communication de sortie comme premier tunnel VPN par une première liaison de communication (61) entre la première interface de transmission de données (21) et le premier dispositif de communication de sortie (7), et
- transmettre et crypter les premières données entre l'ordinateur de service et un autre dispositif de communication de sortie comme second tunnel VPN par l'intermédiaire du premier tunnel VPN.

11. Procédé selon la revendication 10,
**caractérisé en ce qu'**il comporte en outre les étapes consistant à :
authentifier l'ordinateur de service par rapport au dispositif de communication d'entrée.
